# EUROPEAN PATENT APPLICATION

(11) **EP 4 744 871 A1**
(43) Date of publication of application: **20.05.2026**
(21) Application number: 25205388.9
(22) Date of filing: 29.09.2025
(51) Int. Cl.: B29C 73/16

(54) **PUNCTURE REPAIR KIT**

(30) Priority: 18.11.2024 JP 2024201106
(71) Applicant: SUMITOMO RUBBER INDUSTRIES, LTD., Kobe-shi, Hyogo 651-0072 (JP)
(72) Inventor: MAKI, TAKASHI, Hyogo, 651-0072 (JP); NOMURA, KEISUKE, Hyogo, 651-0072 (JP)
(74) Representative: Forresters IP LLP

(57) **Abstract**

A puncture repair kit (1) switchable between a repair mode for repairing a puncture in an object (T) and a supply mode for supplying only compressed air (A) includes a container (2) containing a puncture repair fluid, a compressed air source (3) for supplying the compressed air (A), a cover member (4) for supplying only the compressed air (A), and an extraction portion (5) disposed between the compressed air source (3) and the container (2) or the cover member (4). The extraction portion (5) includes an outer member (6) configured to have the container (2) or the cover member (4) attached thereto, an inner member (7) assembled inside the outer member (6), and a seal member (8) attached to an outer periphery of the inner member (7). The inner member (7) has a seal retaining structure (7a) for preventing the seal member (8) from coming off the inner member (7).

## Description

### TECHNICAL FIELD

The present invention relates to a puncture repair kit configured to be switchable between a repair mode for repairing a puncture in an object and a supply mode for supplying only compressed air.

### BACKGROUND ART

Conventionally, puncture repair kits are known for repairing flat tires. For example, Patent Document 1 listed below proposes a puncture repair kit for repairing a puncture by injecting a puncture repair fluid and compressed air into a punctured tire by using compressed air from a compressor.

### RELATED ART DOCUMENTS

### PATENT DOCUMENTS

[Patent Document 1]
Japanese Unexamined Patent Application Publication No. 2023-154298

### SUMMARY OF THE INVENTION

### [Problems to be solved by the invention]

However, with the puncture repair kit of Patent Document 1, when attaching a container containing the puncture repair fluid to an extraction portion for extracting the puncture repair fluid, a sealing member disposed between the extraction portion and the container could fall off, therefore, the container needs to be carefully attached to the extraction portion.

The present invention was made in view of the above, and a primary object thereof is to provide a puncture repair kit that allows easy attachment of the container to the extraction portion.

### [Means for Solving the Problems]

The present invention is a puncture repair kit switchable between a repair mode for repairing a puncture in an object and a supply mode for supplying only compressed air, including:
a container containing a puncture repair fluid;
a compressed air source for supplying the compressed air;
a cover member used to supply only the compressed air; and
an extraction portion disposed between the compressed air source and the container or the cover member, wherein
the extraction portion includes an outer member, an inner member, and a seal member,
the outer member is configured to have the container or the cover member attached thereto,
the inner member is assembled inside the outer member,
the seal member is attached to an outer periphery of the inner member,
characterised in that the inner member has a seal retaining structure for preventing the seal member from coming off the inner member.

### [Effects of the Invention]

The puncture repair kit of the present invention allows easy attachment of the container to the extraction portion by having the configuration described above.

### [Brief Description of the Drawings]

FIG. 1 is a cross-sectional view schematically showing a puncture repair kit according to an embodiment of the present invention with a container attached thereto.
FIG. 2 is a cross-sectional view schematically showing the puncture repair kit with a cover member attached thereto.
FIG. 3 is a perspective view of an inner member.
FIG. 4 is a perspective view of the inner member with a seal member attached thereto.

### [Description of Embodiments]

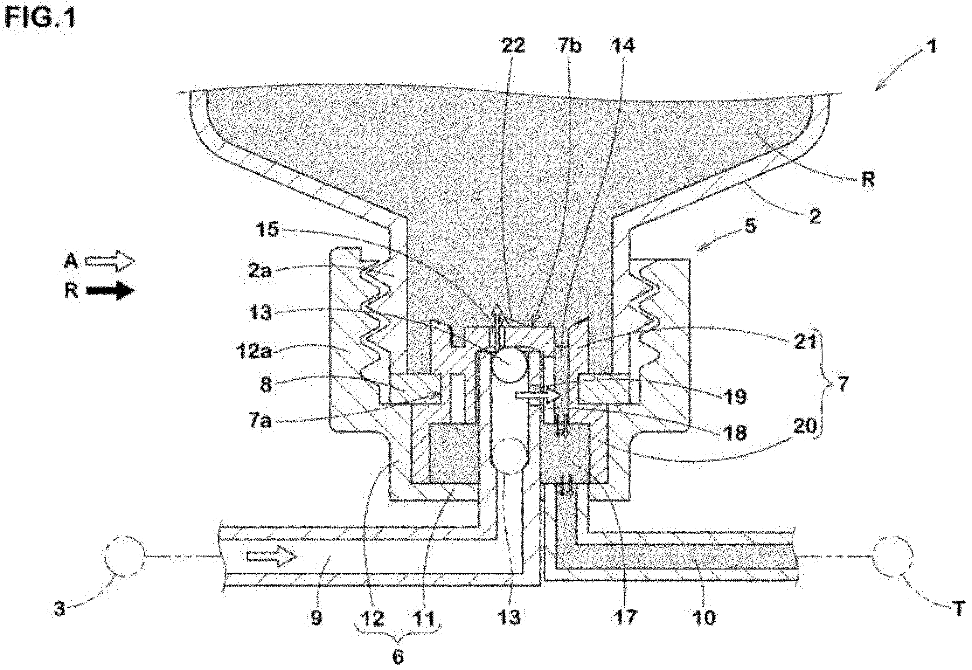

An embodiment of the present invention will now be described in conjunction with accompanying drawings. FIG. 1 is a cross-sectional view schematically showing a puncture repair kit 1 of the present embodiment with a container 2 attached thereto. As shown in FIG. 1, the puncture repair kit 1 is suitably used for repairing a puncture in an object (T), such as a punctured tire, by attaching the container 2 containing a puncture repair fluid (R) and injecting the puncture repair fluid (R) together with compressed air (A) into the object (T), for example.

In the present specification, the state in which the puncture repair fluid (R) and the compressed air (A) are injected into the object (T) is a repair mode in which a puncture in the object (T) can be repaired. It should be noted that flows of the puncture repair fluid (R) during puncture repair are indicated by solid black arrows, and flows of the compressed air (A) are indicated by hollow arrows in order to facilitate understanding in the present specification.

The container 2 has a mouth portion (2a) having a male screw formed around a periphery of the mouth portion (2a). It is preferred that the container 2 contains the puncture repair fluid (R) inside the container 2 through the mouth portion (2a). The mouth portion (2a) has a film (not shown) for keeping the contained puncture repair fluid (R) airtight, for example. The container 2 configured as such is suitable for long-term storage of the puncture repair fluid (R).

The puncture repair kit 1 of the present embodiment includes a compressed air source 3 for supplying the compressed air (A). The compressed air source 3 is a compressor, for example. The compressed air source 3 generates the compressed air (A) by receiving electricity via a cord (not shown) connected to an external power source, for example. The compressed air source 3 configured as such can supply a large amount of the compressed air (A) in a small size and is easy to store when not in use. It should be noted that the compressed air source 3 is not limited to such a form, and may be a pressure vessel that contains the compressed air (A), for example.

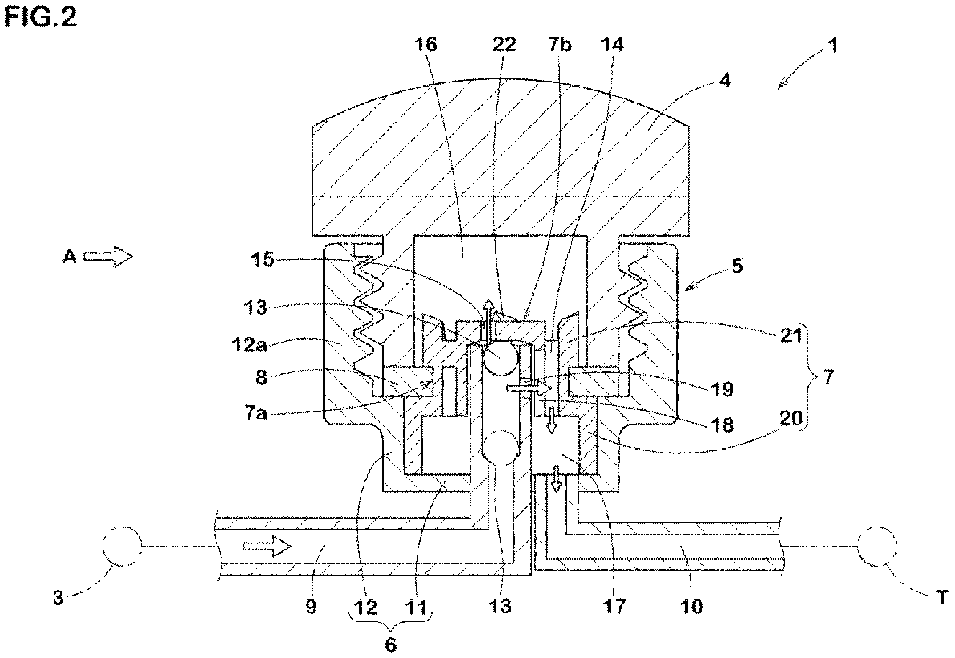

FIG. 2 is a cross-sectional view schematically showing the puncture repair kit 1 with a cover member 4 attached thereto. As shown in FIG. 2, the puncture repair kit 1 can also be suitably used to supply only the compressed air (A) by attaching the cover member 4 for supplying only the compressed air (A) to the object (T) whose air pressure has decreased, for example. In the present specification, a state in which only the compressed air (A) is injected into the object (T) is a supply mode in which only the compressed air (A) can be supplied. In other words, only the compressed air (A), not with the puncture repair fluid (R), is injected into the object (T) when the puncture repair kit 1 is operated in the supply mode.

The puncture repair kit 1 of the present embodiment can supply only the compressed air (A) to the object (T) by driving the compressed air source 3 with the cover member 4 attached to the puncture repair kit 1. The puncture repair kit 1 configured as such can be used not only when the object (T) has a puncture, but also when the air pressure of the object (T) is decreased. Further, the puncture repair kit 1 configured as such can be used for various purposes using the compressed air (A) in addition to injecting air to increase air pressure.

As shown in FIG. 1 and FIG. 2, the puncture repair kit 1 of the present embodiment includes an extraction portion 5 disposed between the container 2 or the cover member 4 and the compressed air source 3. The puncture repair kit l configured as such can be switched between the repair mode, in which a puncture in the object (T) can be repaired, and the supply mode, in which only the compressed air (A) can be supplied, depending on whether the mouth portion (2a) of the container 2 or the cover member 4 is attached to the extraction portion 5.

The extraction portion 5 is a connector through which the compressed air (A) is supplied from the compressed air source 3 and through which the puncture repair fluid (R) is extracted from the container 2, for example. The extraction portion 5 in the present embodiment includes an outer member 6 to which the mouth portion (2a) or the cover member 4 of the container 2 is attached, and an inner member 7 that is assembled inside the outer member 6.

It is preferred that the extraction portion 5 includes a seal member 8 attached to an outer periphery of the inner member 7. The seal member 8 configured as such can improve the airtightness between the extraction portion 5 and the container 2 or the cover member 4.

The inner member 7 of the present embodiment has a seal retaining structure (7a) for preventing the seal member 8 from coming off the inner member 7. The extraction portion 5 configured as such prevents the seal member 8 from falling off the inner member 7 even when switching from the supply mode to the repair mode. Therefore, the puncture repair kit 1 of the present embodiment allows the container 2 to be easily attached to the extraction portion 5.

In a more preferred embodiment, the outer member 6 may include a first inlet flow passage 9 for supplying the compressed air (A) from the compressed air source 3 to the extraction portion 5, and an outlet flow passage 10 for discharging the puncture repair fluid (R) and the compressed air (A) from the extraction portion 5. The outer member 6 includes a floor plate portion 11 in which the first inlet flow passage 9 and the outlet flow passage 10 are provided, and a cylindrical portion 12 extending from the floor plate portion 11, for example. It is preferred that the cylindrical portion 12 has a connecting portion (12a) for connecting to the mouth portion (2a) of the container 2 or the cover member 4. The outer member 6 configured as such can be firmly attached to the mouth portion (2a) of the container 2 or to the cover member 4.

In the outer member 6, the first inlet flow passage 9, the outlet flow passage 10, the floor plate portion 11, and the cylindrical portion 12 are integrally molded, for example. The outer member 6 configured as such can reduce the number of parts and is excellent in cost performance. The outer member 6 is not limited to such an embodiment, and for example, the first inlet flow passage 9 and the outlet flow passage 10 may be molded as separate members from the floor plate portion 11 and the cylindrical portion 12 and then joined together.

It is preferred the first inlet flow passage 9 has a check valve 13 to prevent the puncture repair fluid (R) from flowing back into the compressed air source 3. FIG. 1 and

FIG. 2 show the check valve 13 in a state in which the compressed air (A) is being supplied. Further, the check valve 13 when the compressed air (A) is not supplied is shown by a two-dot chain line in FIG. 1 and FIG. 2.

The first inlet flow passage 9 configured such as can prevent the puncture repair fluid (R) from flowing back into the compressed air source 3, even if the puncture repair fluid (R) remains inside the container 2 when the supply of the compressed air (A) from the compressed air source 3 is stopped, thereby, it is possible that damage to the compressed air source 3 is prevented.

The check valve 13 is a ball valve, for example. The check valve 13 configured as such can reliably suppress backflow of the puncture repair fluid (R) with a simple configuration, and thus is excellent in the cost performance.

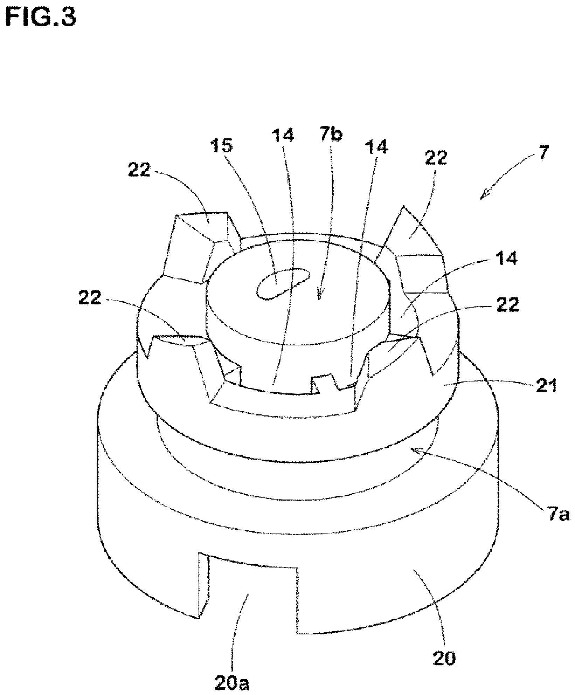

FIG. 3 is a perspective view of the inner member 7. As shown in FIGs. 1 to 3, it is preferred that the inner member 7 includes a second inlet flow passage 14 through which the puncture repair fluid (R) is supplied from the container 2 in the repair mode, and a first opening 15 for supplying the compressed air (A) from the first inlet flow passage 9 toward the inside of the container 2.

The second inlet flow passage 14 extends in the vertical direction during puncture repair, for example. It is preferred that the first opening 15 is provided at the end of the first inlet flow passage 9. In the repair mode, the inner member 7 configured as such can efficiently supply the compressed air (A) to the inside of the container 2, and can smoothly receive the puncture repair fluid (R) by the supplied compressed air (A) and gravity.

In the supply mode, the second inlet flow passage 14 and the first opening 15 are used to allow the compressed air (A) to flow through a space 16 formed between the cover member 4 and the inner member 7. In the supply mode, the inner member 7 configured as such can efficiently supply the compressed air (A) to the object (T).

The inner member 7 of the present embodiment has a valve retaining structure (7b) for preventing the check valve 13 from being discharged from the first inlet flow passage 9. The valve retaining structure (7b) is provided adjacent to the first opening 15, for example. The valve retaining structure (7b) configured as such does not require additional processing and is cost-effective. The valve retaining structure (7b) is not limited to such a manner, and may be a protrusion that protrudes toward the inside of the first inlet flow passage 9, or a narrowed portion having a decreased inner diameter of the first inlet flow passage 9, for example.

The inner member 7 and the outer member 6 assembled together include a mixing chamber 17 for producing a mixture of the puncture repair fluid (R) and the compressed air (A) within their assembled interior, for example. The mixing chamber 17 is a unified space extending around the first inlet flow passage 9, for example. With the mixing chamber 17 configured as such, the puncture repair fluid (R) can be uniformly mixed with the compressed air (A) in a large space.

The inner member 7 includes at least one, in the present embodiment one, second opening 18 for supplying at least a portion of the compressed air (A) to the second inlet flow passage 14 or the mixing chamber 17. FIGs. 1 and 2 show a state in which at least a portion of the compressed air (A) is supplied to the second inlet flow passage 14. The extraction portion 5 configured as such can supply the compressed air (A) to at least one of the mixing chamber 17 and the second inlet flow passage 14 without obstructing the flow of the puncture repair fluid (R) in the second inlet flow passage 14, therefore, it is possible that the puncture repair fluid (R) and the compressed air (A) are mixed together efficiently.

The first inlet flow passage 9 of the outer member 6 includes a third opening 19 for supplying at least a portion of the compressed air (A) to the second inlet flow passage 14 or the mixing chamber 17. The third opening 19 in the present embodiment communicates with the second inlet flow passage 14. The inner member 7 configured as such can supply at least a portion of the compressed air (A) to the second inlet flow passage 14 or the mixing chamber 17 by overlapping the second opening 18 with the third opening 19 formed in the first inlet flow passage 9 of the outer member 6. It should be noted that the expression "the second opening overlaps with the third opening" means that the second opening immediately overlaps with the third opening without having another member between the second opening and the third opening so that the second opening and the third opening communicate with each other in the present specification.

The inner member 7 can be assembled with the outer member 6 so that the second opening 18 and the third opening 19 do not overlap, or can be changed to a separate member that does not have the third opening 19, so that the entire amount of the compressed air (A) can be supplied to the inside of the container 2, for example. The puncture repair kit 1 configured as such can meet the required specifications by using many common parts, and is therefore excellent in the cost performance.

The inner member 7 includes an outer cylindrical portion 20 configured to be assembled with the cylindrical portion 12 of the outer member 6, and a ceiling portion 21 configured to be assembled to the first inlet flow passage 9, for example.

The outer cylindrical portion 20 is provided with one or more notches (20a) (three notches (20a) in the present embodiment) that are used for positioning when assembled to the cylindrical portion 12 of the outer member 6. It is preferred that pitches of the notches (20a), three notches (20a) in the present embodiment, are different from one another when the outer cylindrical portion 20 has a plurality of the notches (20a). The floor plate portion 11 and/or the cylindrical portion 12 of the outer member 6 may have one or more protrusions (not shown) configured to be engaged with the notch (20a) or the notches (20a) for positioning when the outer member 6 and the inner member 7 are assembled together, for example. Further, at least one of the one or more protrusions of the outer member 6 may have one or more small protrusions or recessed portions and at least one of the notch (20a) or the notches (20a) may have one or more recessed portions or small protrusions corresponding to those of the at least one of the one or more protrusions of the outer member 6, and the small protrusions or the recessed portions of the outer member 6 are engaged with the recessed portions or the small protrusions of the notch (20a) or the notches (20a), which functions as positioning when the outer member 6 and the inner member 7 are assembled together, for example. The outer cylindrical portion 20 configured as such is assembled with the cylindrical portion 12 of the outer member 6 in only one direction, i.e., only in a predetermined orientation, thereby, incorrect assembly can be prevented.

It should be noted that in the case of a configuration in which the flow path of the compressed air (A) is changed by changing the combination angle of the inner member 7 and the outer member 6, it is preferred that the pitches of the notches (20a), three notches (20a) in the present embodiment, are the same and that incorrect assembly is prevented by markings and the like.

At least one of the notches (20a) has a locking mechanism (not shown) for maintaining the assembled state of the outer member 6 and the inner member 7, for example. The engagement of the protrusion or the protrusions formed in the floor plate portion 11 and/or the cylindrical portion 12 with the notch (20a) or the notches (20a) formed in the outer cylindrical portion 20 may function as the locking mechanism, for example. The notches (20a) configured as such eliminate the risk of disassembly of the outer member 6 and the inner member 7, and thus can improve reliability during long-term storage.

The ceiling portion 21 is provided with at least one second inlet flow passage 14 (three second inlet flow passages 14 in the present embodiment), and at least one first opening 15 (one first opening 15 in the present embodiment). The first inlet flow passage 9 is provided with at least one third opening 19 (one third opening 19 in the present embodiment). The second inlet flow passages 14 of the ceiling portion 21 in the present embodiment are arranged on one side of the perimeter of the first opening 15 in a plan view. The second inlet flow passages 14 configured as such accelerate the mixing of the puncture repair fluid (R) and the compressed air (A) in the mixing chamber 17, and thus can efficiently mix the puncture repair fluid (R) and the compressed air (A).

The ceiling portion 21 has at least one breaking portion 22, four breaking portions 22 in the present embodiment, for breaking the film (not shown) provided on the mouth portion (2a) of the container 2 when in the supply mode. The breaking portions 22 are formed around the second inlet flow passage 14, for example. The inner member 7 configured as such can break the film of the container 2 by simply attaching the container 2 to the extraction portion 5 to take out the puncture repair fluid (R) from the container 2.

The seal retaining structure (7a) is a groove formed on the outer periphery of the inner member 7, for example.
The seal retaining structure (7a) configured as such can reliably prevent the seal member 8 from coming off with a simple configuration, and can achieve both the cost performance and reliability.

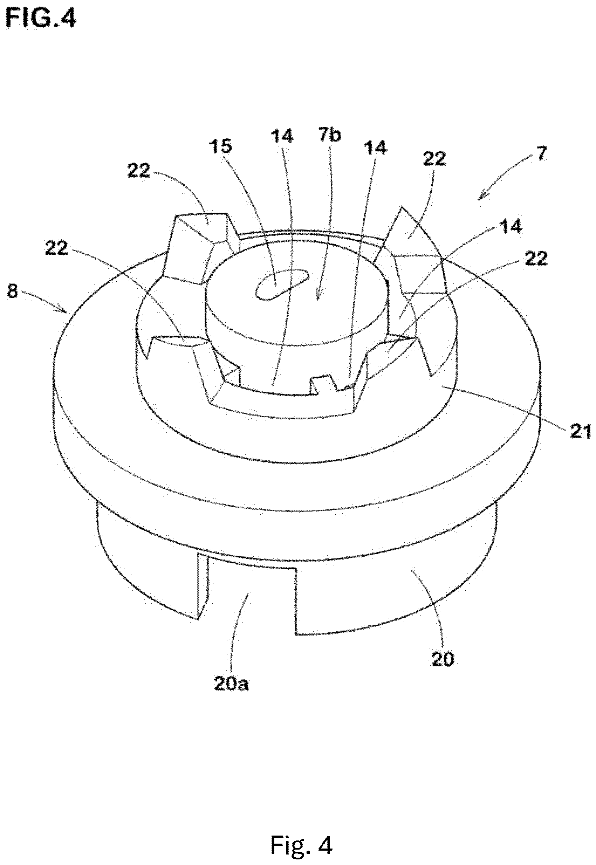

FIG. 4 is a perspective view of the inner member 7 with the seal member 8 attached thereto. As shown in FIG. 1, FIG. 2, and FIG. 4, it is preferred that the seal member 8 is a disk-shaped gasket, more specifically, a ring-shaped flat gasket in the present embodiment. The seal member 8 has a surface on one side configured to be in contact with the outer member 6 and the inner member 7 when assembled, and a surface on the other side configured to be in contact with the mouth portion (2a) of the container 2 or the cover member 4 when in use, for example. The seal member 8 configured as such can improve the airtightness between the extraction portion 5 and the mouth portion (2a) of the container 2 or the cover member 4, and the airtightness between the outer member 6 and the inner member 7.

In the repair mode, the seal member 8 of the present embodiment is sandwiched between the mouth portion (2a) of the container 2 and the extraction portion 5 to maintain the sealed state. Further, in the supply mode, the seal member 8 of the present embodiment is sandwiched between the cover member 4 and the extraction portion 5, thereby maintaining a sealed state. The seal member 8 configured as such is suitable for maintaining a sealed state for a long period of time.

While detailed description has been made of especially preferred embodiment of the present invention, the present invention can be embodied in various forms without being limited to the illustrated embodiment.

### [Statement of Invention]

The present invention includes the following aspects.

### [Present Invention 1]

A puncture repair kit switchable between a repair mode for repairing a puncture in an object and a supply mode for supplying only compressed air, including:
a container containing a puncture repair fluid;
a compressed air source for supplying the compressed air;
a cover member used to supply only the compressed air; and
an extraction portion disposed between the compressed air source and the container or the cover member, wherein
the extraction portion includes an outer member, an inner member, and a seal member,
the outer member is configured to have the container or the cover member attached thereto,
the inner member is assembled inside the outer member,
the seal member is attached to an outer periphery of the inner member,
characterised in that the inner member has a seal retaining structure for preventing the seal member from coming off the inner member.

### [Present Invention 2]

The puncture repair kit according to Present Invention 1, wherein the seal retaining structure is a groove formed on the outer periphery of the inner member.

### [Present Invention 3]

The puncture repair kit according to Present Invention 1 or 2, wherein the seal member is sandwiched between the container and the extraction portion in the repair mode, and is sandwiched between the cover member and the extraction portion in the supply mode, so as to maintain a sealed state.

### [Present Invention 4]

The puncture repair kit according to any one of Present Inventions 1 to 3, wherein the seal member is a disk-shaped gasket.

### [Present Invention 5]

The puncture repair kit according to any one of Present Inventions 1 to 4, wherein
the outer member includes a first inlet flow passage for supplying the compressed air from the compressed air source to the extraction portion, and an outlet flow passage for discharging the puncture repair fluid and the compressed air from the extraction portion, and
the first inlet flow passage has a check valve to prevent the puncture repair fluid from flowing back into the compressed air source.

### [Present Invention 6]

The puncture repair kit according to Present Invention 5, wherein the inner member has a valve retaining structure for preventing the check valve from being discharged from the first inlet flow passage.

### [Present Invention 7]

The puncture repair kit according to Present Invention 5 or 6, wherein the check valve is a ball valve.

### [Description of Reference Signs]

- 1: puncture repair kit
- 2: container
- 3: compressed air source
- 4: cover member
- 5: extraction portion
- 6: outer member
- 7: inner member
- 7a: seal retaining structure
- 8: seal member

## Claims

1. A puncture repair kit switchable between a repair mode for repairing a puncture in an object and a supply mode for supplying only compressed air, comprising:
a container containing a puncture repair fluid;
a compressed air source for supplying the compressed air;
a cover member used to supply only the compressed air; and
an extraction portion disposed between the compressed air source and the container or the cover member, wherein
the extraction portion includes an outer member, an inner member, and a seal member,
the outer member is configured to have the container or the cover member attached thereto,
the inner member is assembled inside the outer member,
the seal member is attached to an outer periphery of the inner member,
**characterised in that** the inner member has a seal retaining structure for preventing the seal member from coming off the inner member.

2. The puncture repair kit according to claim 1, wherein the seal retaining structure is a groove formed on the outer periphery of the inner member.

3. The puncture repair kit according to claim 1 or 2, wherein the seal member is sandwiched between the container and the extraction portion in the repair mode, and is sandwiched between the cover member and the extraction portion in the supply mode, so as to maintain a sealed state.

4. The puncture repair kit according to any one of claims 1 to 3, wherein the seal member is a disk-shaped gasket.

5. The puncture repair kit according to any one of claims 1 to 4, wherein
the outer member includes a first inlet flow passage for supplying the compressed air from the compressed air source to the extraction portion, and an outlet flow passage for discharging the puncture repair fluid and the compressed air from the extraction portion, and
the first inlet flow passage has a check valve to prevent the puncture repair fluid from flowing back into the compressed air source.

6. The puncture repair kit according to claim 5, wherein the inner member has a valve retaining structure for preventing the check valve from being discharged from the first inlet flow passage.

7. The puncture repair kit according to claim 5 or 6, wherein the check valve is a ball valve.

8. The puncture repair kit according to any one of claims 1 to 7, wherein
the outer member includes a first inlet flow passage for supplying the compressed air from the compressed air source to the extraction portion, and an outlet flow passage for discharging the puncture repair fluid and the compressed air from the extraction portion,
the inner member includes a first opening and a second inlet flow passage,
in the repair mode,
the container is attached to the extraction portion,
the first opening communicates with the first inlet flow passage and the inside of the container, and
the second inlet flow passage communicates with the inside of the container and the outlet flow passage.

9. The puncture repair kit according to claim 8, wherein
in the supply mode,
the cover member is attached to the extraction portion so as to include a space surrounded by the cover member and the extraction portion,
the first opening communicates with the first inlet flow passage and the space surrounded by the cover member and the extraction portion, and
the second inlet flow passage communicates with the outlet flow passage and the space surrounded by the cover member and the extraction portion.

10. The puncture repair kit according to claim 8 or 9, wherein
the extraction portion includes a mixing chamber for producing a mixture of the puncture repair fluid and the compressed air in an assembly of the inner member and the outer member,
the mixing chamber communicates with the second inlet flow passage and the outlet flow passage, and
the inner member includes a second opening communicating with the first inlet flow passage and the second inlet flow passage or the mixing chamber.

11. The puncture repair kit according to claim 10, wherein
the first flow passage includes a third opening, and
the inner member is configured to be assembled with the outer member so that the second opening overlaps with the third opening or the second opening does not overlap with the third opening.

12. The puncture repair kit according to any one of claims 1 to 11, wherein
the inner member includes one or more notches, and
when the inner member includes a plurality of the notches, pitches of the notches are different from one another.

13. The puncture repair kit according to any one of claims 1 to 11, wherein
the inner member is configured to be assembled with the outer member at different angles,
the inner member includes one or more notches, and
when the inner member includes a plurality of the notches, pitches of the notches are the same.

14. The puncture repair kit according to claim 12 or 13, wherein the outer member has one or more protrusions configured to be engaged with the one or more notches when the outer member and the inner member are assembled together.

15. The puncture repair kit according to any one of claims 8 to 12, wherein
the inner member includes a plurality of the second inlet flow passages, and
the plurality of the second inlet flow passages is arranged on one side of a perimeter of the first opening.
